# EUROPEAN PATENT APPLICATION

(11) **EP 3 162 758 A1**
(43) Date of publication of application: **03.05.2017**
(21) Application number: 16194831.0
(22) Date of filing: 20.10.2016
(51) Int. Cl.: B67D 3/00, A47J 31/00

(54) **BEVERAGE MACHINE**

(30) Priority: 30.10.2015 CN 201520858033 U
(71) Applicant: BSH Hausgeräte GmbH, 81739 München (DE)
(72) Inventor: Jiang, Ji, Nanjing, 210046 (CN); Ling, Yuzheng, Nanjing, 210000 (CN); Xue, Qingfei, JuRong, 212426 (CN)

(57) **Abstract**

The invention discloses a beverage machine (1), including a machine body (2), a water tank (3) that can be detachably installed on the machine body (2), and a base (4) provided on the machine body (2) and used for installing the water tank (3). A water inlet (5) is provided on the base (4). The beverage machine further includes an adapter apparatus (6) that connects the water tank (3) to the base (4). By means of the invention, the problems in the prior art that a beverage machine cannot be carried conveniently and water resources are wasted in use caused by an oversized water tank are resolved. On one hand, the storage space for the beverage machine is reduced when going outside, making it convenient to carry the machine. On the other hand, by using a beverage bottle as the water tank directly, water resources are used properly according to demand on water and are not wasted.

## Description

The invention relates to a beverage machine, and in particular, to a water inlet structure of a beverage machine, which is applied mainly to a coffee machine, a juice machine and the like.

Currently, a beverage machine in the market mainly includes two parts: a machine body and a water tank. The volume of the water tank is about half the total volume of the beverage machine, so the entire machine has a large volume and is inconvenient to carry. In addition, the water tank is too large, so the beverage machine often stores an excessive amount of water. As a result, the water added into the water tank each time cannot be used up, resulting in waste of water resources.

So far, there is no effective solutions to the problems in the prior art that a beverage machine cannot be carried conveniently and water resources are wasted in use caused by the oversized water tank.

The invention provides a beverage machine, so as to resolve at least the problems in the prior art that a beverage machine cannot be carried conveniently and water resources are wasted in use caused by the oversized water tank.

To achieve the objective, one aspect of the invention provides a beverage machine.

The beverage machine according to the invention includes a machine body, a water tank that can be detachably installed on the machine body, and a base provided on the machine body and used for installing the water tank. A water inlet is provided on the base. The beverage machine further includes an adapter apparatus for connecting the water tank to the base.

The beverage machine may be a coffee machine, a juice machine and the like. By using the adapter apparatus, a connection between the base and various water tanks such as a mini water tank and a beverage bottle can be achieved, while a water tank with a relatively large volume does not need to be carried. Preferably, the water tank includes a beverage bottle having a threaded bottle mouth. By using a beverage bottle such as a mineral water bottle as the water tank, only the machine body of the beverage machine needs to be carried when going out instead of taking a water tank together, making it more convenient to carry the machine.

Preferably, the adapter apparatus includes: an internally threaded connector pipe engaged with the threaded bottle mouth of the beverage bottle, and a water outlet pipe connected with the water inlet on the base. The internally threaded connector pipe has a greater cross-sectional width than the water outlet pipe. The foregoing internal thread makes the connector pipe easily match with the threaded bottle mouth of the beverage bottle.

Preferably, the adapter apparatus includes: a valve body controlling the opening and closing of the water outlet pipe.

Preferably, in a solution, the valve body is a sealing ring apparatus, where the sealing ring apparatus includes a bump that has a cutout, the bump protruding toward the water outlet pipe. By using the foregoing sealing ring apparatus, a water outlet is sealed by a seal ring and water cannot flow out when the water tank or the beverage bottle is taken out, which is simple and practical and does not need other components.

Preferably, the top of the bump is of a spherical structure. The spherical structure of the bump, through settings of the structure, material and thickness, can produce a support force that can bear the pressure from self weight of water. The suction force produced when the machine is sucking water is greater than the foregoing support force, thereby ensuring that water can flow out.

Preferably, the cutout is a cross-shaped cutout. The cross-shaped cutout has a small slit, so that on one hand, sealing can be easily achieved and water in the water tank can be prevented from flowing out to a certain extent; on the other hand, in a state in which the machine is sucking water and an suction force is produced, the cross-shaped cutout opens and allows water to flow into the water inlet on the base.

Preferably, in another solution, the valve body can move between a first position and a second position, where at the first position, the valve body closes a channel allowing water to flow through between the internally threaded connector pipe and the water outlet pipe, and at the second position, the valve body opens the channel.

Preferably, the valve body includes a spool passing through the channel. When at the first position, a first end of the spool seals a connection point between the internally threaded connector pipe and the water outlet pipe, and when at the second position, the spool forcibly moves up to open the connection point after a second end of the spool contacts the water inlet on the base.

Preferably, the second end of the spool is of a cross-shaped structure. The cross-shaped structure enables water to flow into the water inlet on the base when the spool separates from the connection point between the internally threaded connector pipe and the water outlet pipe.

Preferably, a sealing member is disposed at the first end of the spool, further sealing the connection point between the internally threaded connector pipe and the water outlet pipe.

Preferably, a spring element is sleeved on the spool. The spring element has a function of resetting. When a beverage bottle is taken out, the spring element restores from a compressed state, and enables the spool to return from the second position to the first position. At this moment, the water supply channel, that is, the connection point between the internally threaded connector pipe and the water outlet pipe, is closed.

Preferably, the water inlet on the base is of a bump structure. The bump structure makes it easy to lift the second end of the spool, enabling the first end of the spool to separate from the sealed position.

Preferably, the base includes a groove for accommodating the adapter apparatus, the adapter apparatus being installed in the groove of the base. By using the foregoing groove structure, it is ensured that the adapter apparatus is installed accurately on the base.

Preferably, the foregoing beverage machine further includes a sealing ring sleeved on an outer side wall of the adapter apparatus, the sealing ring sealing the gap between the outer side wall of the adapter apparatus and an inner side wall of the groove. The water seepage prevention sealing ring is used to further prevent water from seeping between the water outlet of the adapter apparatus and the water inlet on the base.

By means of the invention, the problems in the prior art that a beverage machine cannot be carried conveniently and water resources are wasted in use caused by an oversized water tank are resolved. On one hand, the storage space for the beverage machine is reduced when going outside, making it convenient to carry the machine. On the other hand, by using a beverage bottle as the water tank directly, water resources are used properly according to demand on water and are not wasted.

The accompanying drawings are used to provide further understanding of the invention, and form a part of this application. The exemplary embodiments and descriptions of the embodiments are used to explain the invention, but do not form a limitation to the invention. In the accompanying drawings:
- FIG. 1: is a schematic structural diagram of a beverage machine;
- FIG. 2: is a schematic diagram of a beverage bottle connecting to an adapter apparatus;
- FIG. 3: is a schematic diagram of an adapter apparatus in a first embodiment;
- FIG. 4: is a schematic structural diagram of a sealing ring apparatus;
- FIG. 5: is a schematic structural diagram of a spool in a second embodiment;
- FIG. 6: is a schematic diagram of the bottom of the spool in the second embodiment;
- FIG. 7: is a schematic diagram of an adapter apparatus in the second embodiment;
- FIG. 8: is a schematic diagram of a valve body that is in an open state in the second embodiment; and
- FIG. 9: is a schematic diagram of the valve body that is in a closed state in the second embodiment.

The following describes the invention in detail with reference to the accompanying drawings and embodiments. It should be noted that the embodiments and features of the embodiments in this application can be combined when they are not contradictory.

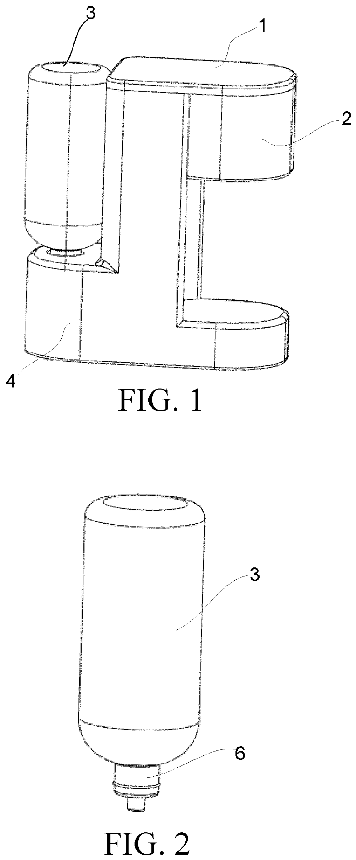

The invention provides a beverage machine. The beverage machine may be a coffee machine, a juice machine and the like. FIG. 1 is a schematic structural diagram of the beverage machine. FIG. 2 is a schematic diagram of a beverage bottle connecting to an adapter apparatus. As shown in FIG.1 and FIG. 2:

The beverage machine 1 includes a machine body 2, a water tank 3 that can be detachably installed on the machine body, and a base 4 provided on the machine body and used for installing the water tank. A water inlet 5 is provided on the base 4. The beverage machine further includes an adapter apparatus 6 connecting the water tank 3 to the base 4. By using the adapter apparatus 6, connection between the base and various water tanks such as a mini water tank and a beverage bottle can be achieved, while a water tank with a relatively large volume does not need to be carried.

Preferably, by using a beverage bottle such as a mineral water bottle as the water tank, only the machine body of the beverage machine needs to be carried when going out instead of taking a water tank together, making it more convenient to carry the machine.

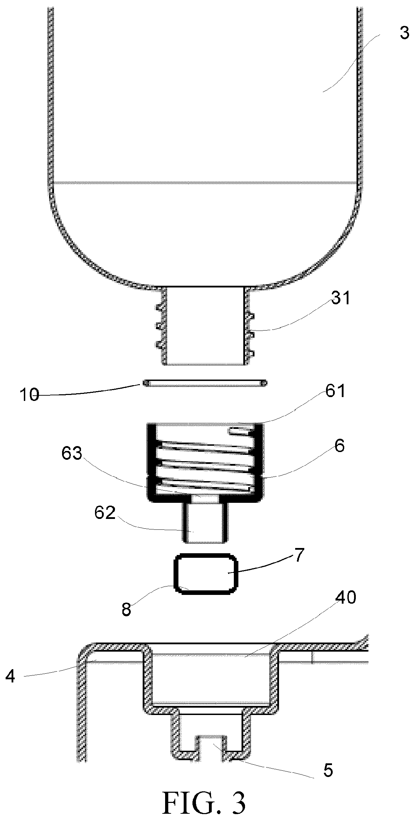

In the first embodiment, FIG. 3 is a schematic diagram of an adapter apparatus in the first embodiment. As shown in FIG. 3:

The adapter apparatus 6 includes: an internally threaded connector pipe 61 engaged with the threaded bottle mouth 31 of the beverage bottle 3, where the internal thread makes the connector pipe 61 easily match with the threaded bottle mouth 31 of the beverage bottle; a water outlet pipe 62 connected with the water inlet 5 on the base 4, where the internally threaded connector pipe 61 has a greater cross-sectional width than the water outlet pipe 62; and a valve body 7 controlling the opening and closing of the water outlet pipe 62. The valve body 7 is used to open the water outlet pipe 62 when water supply is needed, and when water supply is not needed, the valve body 7 closes the water outlet pipe 62.

The base 4 includes a groove 40 for accommodating the adapter apparatus 6, the adapter apparatus 6 being installed in the groove 40 of the base 4. The adapter apparatus 6 can be ensured to be installed accurately on the base 4 by using the foregoing groove structure.

The beverage machine 1 further includes a sealing ring 10 sleeved on an outer side wall of the adapter apparatus 6, the sealing ring 10 sealing the gap between the outer side wall of the adapter apparatus 6 and an inner side wall of the groove 40. The water seepage prevention sealing ring 10 is used to further prevent water from seeping between the water outlet of the adapter apparatus 6 and the water inlet 5 on the base 4.

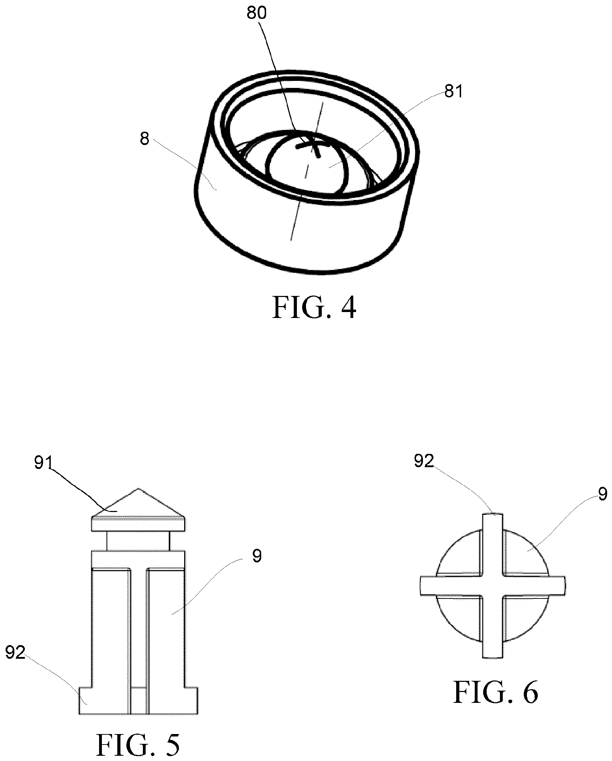

In the first embodiment, the valve body 7 is a sealing ring apparatus 8. FIG. 4 is a schematic structural diagram of the sealing ring apparatus. As shown in FIG. 4, the sealing ring apparatus 8 includes a bump 81 having a cutout 80, the bump 81 protruding toward the water outlet pipe 62. By using the foregoing sealing ring apparatus 8, that the water outlet 62 is sealed by the sealing ring apparatus 8 and water cannot flow out when a water tank or a beverage bottle is taken out can be achieved directly, which is simple and practical and does not need other components.

Preferably, as shown in FIG. 4, the top of the bump 81 is of a spherical structure. The spherical structure of the bump, by setting structure, material and thickness, can produce a certain quantity of support force that can bear the pressure from self weight of water. The suction force produced when a machine is sucking water excesses the foregoing support force, thereby ensuring that water can flow out.

Preferably, as shown in FIG.4, the foregoing cutout 80 is a cross-shaped cutout. The cross-shaped cutout has a small slit, so that on one hand, a seal can be easily formed and water in a water tank can be prevented from flowing out to a certain extent; on the other hand, in a state in which a machine is sucking water and an suction force is produced, the cross-shaped cutout opens and allows water to successfully flow into the water inlet 5 on the base 4.

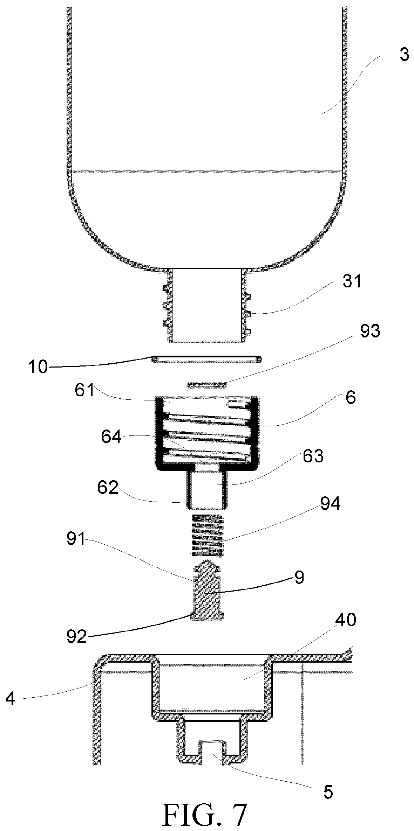

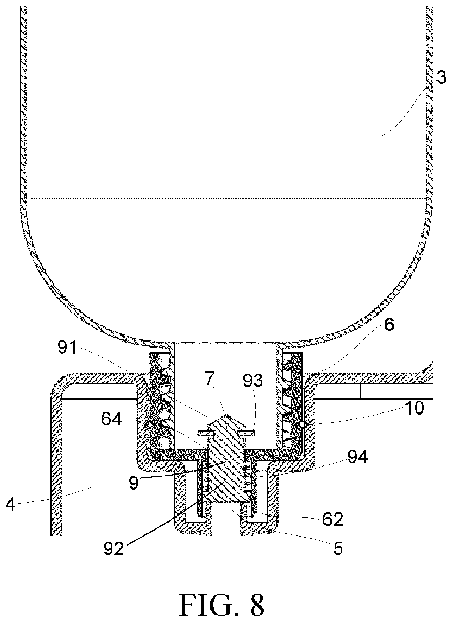

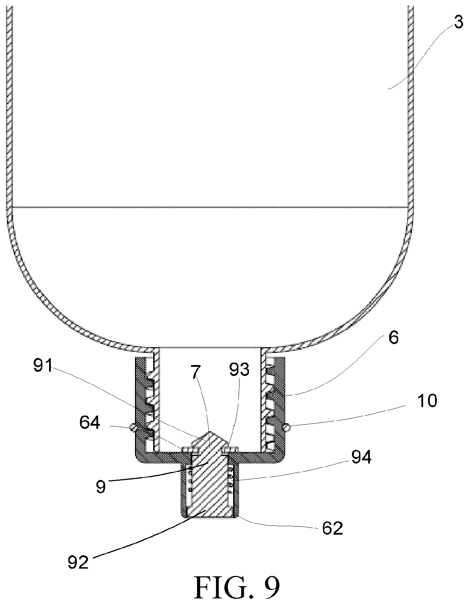

In the second embodiment, FIG. 7 is a schematic diagram of an adapter apparatus in the second embodiment. FIG. 8 is a schematic diagram of a valve body that is in an open state in the second embodiment. FIG. 9 is a schematic diagram of the valve body that is in a closed state in the second embodiment. As shown in FIG. 7, FIG. 8 and FIG. 9:

The adapter apparatus 6 includes: an internally threaded connector pipe 61 engaged with the threaded bottle mouth 31 of the beverage bottle 3, where the internal thread makes the connector pipe easily match with the threaded bottle mouth 31 of the beverage bottle 3; a water outlet pipe 62 connected with the water inlet 5 on the base 4, where the internally threaded connector pipe 61 has a greater cross-sectional width than the water outlet pipe 62; and a valve body 7 controlling the opening and closing of the water outlet pipe 62. The valve body 7 is used to open the water outlet pipe 62 when water supply is needed, and when water supply is not needed, the valve body 7 closes the water outlet pipe 62.

The base 4 includes a groove 40 for accommodating the adapter apparatus 6, the adapter apparatus 6 being installed in the groove 40 of the base 4. The adapter apparatus 6 can be ensured to be installed accurately on the base 4 by using the foregoing groove structure.

The beverage machine 1 further includes a sealing ring 10 sleeved on an outer side wall of the adapter apparatus 6, the sealing ring 10 sealing the gap between the outer side wall of the adapter apparatus 6 and an inner side wall of the groove 40. The water seepage prevention sealing ring 10 is used to further prevent water from seeping between the water outlet of the adapter apparatus 6 and the water inlet 5 on the base 4.

In the second embodiment, the valve body 7 can move between a first position and a second position, where at the first position, the valve body 7 closes a channel 63 allowing water to pass through between the internally threaded connector pipe 61 and the water outlet pipe 62; and at the second position, the valve body 7 opens the channel 63.

FIG. 5 is a schematic structural diagram of a spool in the second embodiment. FIG. 6 is a schematic diagram of the bottom of the spool in the second embodiment. As shown in FIG. 5 and FIG. 6:

The valve body 7 includes a spool 9 passing through the foregoing channel 63. When at the first position, a first end 91 of the spool 9 closes a connection point 64 between the internally threaded connector pipe 61 and the water outlet pipe 62, and when at the second position, the spool 9 forcibly moves up to open the connection point 64 after a second end 92 of the spool 9 contacted the water inlet 5 on the base 4.

Preferably, the second end 92 of the spool 9 is of a cross-shaped structure. The cross-shaped structure enables water to flow into the water inlet on the base when the spool separates from the connection point between the internally threaded connector pipe and the water outlet pipe.

Preferably, a sealing member 93 is disposed at the first end 91 of the spool 9, further sealing the foregoing interface between the internally threaded connector pipe and the water outlet pipe.

Preferably, a spring element is sleeved on the spool 94. The spring element 94 has a function of resetting. When a beverage bottle is taken out, the spring element 94 restores from a compressed state, and gets the spool 9 return from the second position to the first position. At this moment, the water supply channel, that is, the connection point 64 between the internally threaded connector pipe 61 and the water outlet pipe 62 is closed.

Preferably, the water inlet 5 on the base 4 is of a bump structure. The bump structure makes the second end of the spool 9 easily lifted up, enabling the first end of the spool to separate from the sealed position.

By means of the invention, the problems in the prior that a beverage machine cannot be carried conveniently and water resources are wasted when using the machine as a result of a large volume of a water tank are resolved. On one hand, the storage space for a beverage machine is reduced when going out, making it convenient to carry the machine. On the other hand, by using a beverage bottle as a water tank directly, water resources are used properly according to demand on water and are not wasted.

Various specific embodiments described in the foregoing and shown in accompanying drawings are only used for illustrating the invention, and are not entirety of the invention. Within the scope of the basic technical thought of the invention, any types of modifications for the invention made by persons ordinarily skilled in the art fall within the scope of the invention.

## Claims

1. A beverage machine (1), comprising a machine body (2), a water tank (3) that can be detachably installed on the machine body, and a base (4) provided on the machine body and used for installing the water tank (3), a water inlet (5) is provided on the base, **characterized in that** the beverage machine further comprises:
an adapter apparatus (6) connecting the water tank (3) to the base (4).

2. The beverage machine according to claim 1, **characterized in that** the water tank (3) comprises a beverage bottle having a threaded bottle mouth.

3. The beverage machine according to claim 1, wherein the adapter apparatus comprises:
an internally threaded connector pipe (61) engaged with the threaded bottle mouth of the beverage bottle; and
a water outlet pipe (62) connected with the water inlet (5) on the base (4); wherein
the internally threaded connector pipe (61) has a greater cross-sectional width than the water outlet pipe (62).

4. The beverage machine according to claim 3, **characterized in that** the adapter apparatus comprises:
a valve body (7) controlling the opening and closing of the water outlet pipe (62).

5. The beverage machine according to claim 4, **characterized in that** the valve body (7) is a sealing ring apparatus (8), wherein the sealing ring apparatus (8) comprises a bump (81) that has a cutout (80), the bump (81) protruding toward the water outlet pipe (62).

6. The beverage machine according to claim 5, **characterized in that** the top of the bump (81) is of a spherical structure.

7. The beverage machine according to claim 5, **characterized in that** the cutout (80) is a cross-shaped cutout.

8. The beverage machine according to claim 4, **characterized in that** the valve body (7) can move between a first position and a second position, wherein at the first position, the valve body (7) closes a channel (63) allowing water to flow through between the internally threaded connector pipe (61) and the water outlet pipe (62); and
at the second position, the valve body (7) opens the channel (63).

9. The beverage machine according to claim 8, **characterized in that** the valve body (7) comprises a spool (9) passing through the channel (63), wherein when at the first position, a first end (91) of the spool (9) seals a connection point (64) between the internally threaded connector pipe (61) and the water outlet pipe (62); and
when at the second position, the spool (9) forcibly moves up to open the connection point (64) after a second end (92) of the spool contacts the water inlet (5) on the base (4).

10. The beverage machine according to claim 9, **characterized in that** the second end (92) of the spool (9) is of a cross-shaped structure.

11. The beverage machine according to claim 9, **characterized in that** a sealing member (93) is disposed at the first end (91) of the spool (9).

12. The beverage machine according to claim 9, **characterized in that** a spring element (94) is sleeved on the spool (9).

13. The beverage machine according to claim 9, **characterized in that** the water inlet (5) on the base (4) is of a bump structure.

14. The beverage machine according to claim 1, **characterized in that** the base (4) comprises a groove (40) for accommodating the adapter apparatus (6), the adapter apparatus (6) being installed in the groove (40) of the base (4).

15. The beverage machine according to claim 14, **characterized by** comprising a sealing ring (10) sleeved on an outer side wall of the adapter apparatus (6), the sealing ring (10) sealing the gap between the outer side wall of the adapter apparatus (6) and an inner side wall of the groove (40).
